Europäisches Patentamt

European Patent Office

Office européen des brevets

(19)

(11) Veröffentlichungsnummer: **0 265 621**
**B1**

(12) **EUROPÄISCHE PATENTSCHRIFT**

(45) Veröffentlichungstag der Patentschrift:
**11.04.90**

(51) Int. Cl.⁴: **B23B 29/034**

(21) Anmeldenummer: **87112363.4**

(22) Anmeldetag: **26.08.87**

(54) Spannvorrichtung für Werkstücke oder Werkzeuge mit hoher Rundlaufgenauigkeit.

(30) Priorität: **28.10.86 DE 3636581**

(43) Veröffentlichungstag der Anmeldung:
**04.05.88 Patentblatt 88/18**

(45) Bekanntmachung des Hinweises auf die Patenterteilung:
**11.04.90 Patentblatt 90/15**

(84) Benannte Vertragsstaaten:
**DE FR GB IT**

(56) Entgegenhaltungen:
**EP-A- 0 187 647**
**DE-U- 1 968 407**
**US-A- 3 917 422**

(73) Patentinhaber: **Emuge-Werk Richard Glimpel Fabrik für Präzisionswerkzeuge (vormals Moschkau & Glimpel), Nürnberger Strasse 96-100, D-8560 Lauf(DE)**

(72) Erfinder: **Glimpel, Helmut, Dipl.-Ing., Gartenstrasse 6, D-8560 Lauf(DE)**
Erfinder: **Wenzel, Volker, Keilerstrasse 9, D-8560 Lauf(DE)**

(74) Vertreter: **Matschkur, Peter Dipl.-Phys. et al, Czowalla - Matschkur Patentanwälte Dr. Kurt-Schumacher-Strasse 23, D-8500 Nürnberg 11(DE)**

**Beschreibung**

Die Erfindung bezieht sich auf eine Spannvorrichtung für Werkstücke oder Werkzeuge mit hoher Rundlaufgenauigkeit, mit einem in einer zylindrischen Bohrung eines Grundkörpers gelagerten Schaftteil, siehe US-A 3 917 422.

Neben den hydraulischen Spannvorrichtungen verwendet man zur Erzielung hoher Rundlaufgenauigkeiten bevorzugt mechanische Spannsysteme, bei denen die Veränderbarkeit des Durchmessers der Spannhülse entweder durch Längsnuten oder durch axial gegeneinander versetzte innere und äußere Ringeinstichnuten ermöglicht wird. Durch eine axiale Zusammenstauchung der Spannhülse mittels einer Spannmutter od.dgl. ergibt sich eine Durchmesserveränderung gleichzeitig am Innen- und Außendurchmesser, so daß sich die Spannhülse sowohl nach außen in der Bohrung des zylindrischen Grundkörpers, als auch nach innen an der zylindrischen Außenwand des Werkstücks oder Werkzeugs abstützt. Für extrem hohe Rundlaufgenauigkeiten im μ-Bereich sind aber selbst bei Vorsehen mehrerer axial beabstandeter Spannstellen die unvermeidlichen sonstigen Toleranzfehler bei der Fertigung der Bauteile immer noch zu hoch, insbesondere wenn man dabei berücksichtigt, daß ja auch eine hohe Klemmkraft und damit ein großes übertragbares Drehmoment gewährleistet sein soll, die wiederum erhöhte Verspannungen und Verwindungen zur Folge haben müssen.

Zur Korrektur der Parallelitätsfehler mit einem meist zusätzlich vorhandenen Winkelfehler sind bereits Ausgleichszwischenflansche vorgeschlagen worden. Diese sind jedoch sehr teuer und kompliziert und machen die Anordnung unwuchtig.

Der Erfindung liegt daher die Aufgabe zugrunde, eine Spannvorrichtung der eingangs genannten Art so auszugestalten, daß die möglichen Rundlauffehler, insbesondere die auf einer Verkippung der Längsachse des Werkzeugs oder Werkstücks gegenüber der Längsachse der Spannvorrichtung beruhenden Winkelfehler, weitestgehend kompensiert werden können.

Zur Lösung dieser Aufgabe ist erfindungsgemäß vorgesehen, daß im Lagerbereich des Schaftteils eine Justiereinrichtung angeordnet ist, die mehrere in einer Radialebene verteilt angeordnete Gewindebohrungen, insbesondere Kegelgewindebohrungen im Grundkörper, sowie darin einschraubbare Kegelschrauben umfaßt. Der Einfachheit halber wird im folgenden immer nur von Kegelgewindebohrungen gesprochen, ohne daß deshalb eine Beschränkung auf Kegelgewindebohrungen vorliegt.

Durch die erfindungsgemäße Justiereinrichtung, wobei bevorzugt drei oder mehr gegeneinander versetzte Gewindebohrungen im Grundkörper angeordnet sein sollen, läßt sich je nach dem Maß des Einschraubens der Kegelschrauben in ihre Kegelbohrungen - wobei selbstverständlich nur ein sehr kleiner Kegelwinkel vorgesehen ist - eine unterschiedliche Verspannung des Grundkörpers in der genannten Radialebene erzielen, die zu einer Verformung des Grundkörpers und damit zu einer Änderung der Winkellage des in ihm gelagerten Schaftteils eines Werkstücks oder Werkzeuges führt. Auf diese Weise kann - über externe Meßpunkte am eigentlichen Werkstück oder Werkzeug selbst gesteuert -eine Korrektur des bei der Spannung des jeweiligen Werkzeugs oder Werkstücks auftretenden Winkelfehlers erfolgen. Dabei geht es hier nicht nur um die Korrektur des Winkelfehlers, der durch die Lagerung des Schaftteils im Grundkörper bestehen kann, sondern auch etwaiger Winkelfehler, die durch die Spannung weiterer Werkstücke oder Werkzeuge auftreten können, die ihrerseits in dem genannten im Grundköepr gelagerten Schaftteil eingespannt sein können. Spezielles Beispiel hierfür ist die Verwendung eines Futters, welches mit seinem Schaftteil im Grundkörper gelagert ist, während im Futter selbt das eigentliche Werkzeug mit Hilfe einer mechanischen oder hydraulischen Spannvorrichtung gehalten ist. Umgekehrt kann aber auch eine Anordnung Verwendung finden, bei der in dem mit der genannten Justiervorrichtung versehenen Lagerbereich der Bohrung des Grundkörpers unmittelbar die Spannvorrichtung in Form von mechanisch oder hydraulischer betätigbaren Spannhülsen ohne Zwischenanordnung eines Futters angeordnet ist.

Um neben dem besonders wichtigen vorstehend angesprochenen Winkelfehler auch Parallelfehler korrigieren zu können, d.h. Parallelversetzungen der Achse des Werkzeugs oder Werkstücks gegenüber der Achse des Grundkörpers, die ja in vielen Fällen die Drehachse darstellt, kann in Weiterbildung der Erfindung vorgesehen sein, daß die Kegelschrauben durchgehende Innengewindebohrungen für Ausgleichsschrauben zur Korrektur von Parallelitätsfehlern aufweisen.

Dabei ist die Anordnung bevorzugt so getroffen, daß die Ausgleichsschrauben am Spannteil, insbesondere einem Futterteil oder einer Zwischenhülse angreifen, die mit einem Stirnflansch an der planen Stirnfläche des Grundkörpers gleitend verschiebbar anliegt. Bei Lagerung eines Werkstücks oder Werkzeugs mit Hilfe einer unmittelbar in der Bohrung des Grundkörpers gelagerten Spannhülse kann die Justiereinrichtung neben einer Spannstelle, beispielsweise auch hinter der am weitesten im Grundkörper liegenden Spannstelle, oder aber auch bevorzugt zwischen zwei Spannstellen, ggfs. im Bereich eines neben oder zwischen zwei Spannhülsen angeordneten Zwischenrings angebracht sein.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1 einen gewinkelten Axialschnitt (längs der Linie I-I in Fig. 2) durch eine erfindungsgemäße Spannvorrichtung mit mechanischem Spannsystem und zwei Spannstellen,

Fig. 2 eine Stirnansicht der Anordnung nach Fig. 1,

Fig. 3 einen Radialschnitt längs der Linie III-III in Fig. 1,

Fig. 4 einen schematischen Teilschnitt durch eine abgewandelte Ausführungsform mit einer Zwischenbüchse sowie die Kegelschrauben durchsetzenden Ausgleichsschrauben zur Korrektur von Parallelitätsfehlern,

Fig. 5 eine gegenüber Fig. 1 vereinfachte Ausführungsform eines Spannfutters, bei dem der Grundkörper mit einem Verbindungszapfen zur Halterung an einer beliebigen Drehvorrichtung versehen ist, wobei die Justiervorrichtung im Bereich der Spannhülsen angeordnet ist, und

Fig. 6 eine abgewandelte Anordnung, bei der die Justiervorrichtung nicht im Bereich der Spannhülsen, sondern im Lagerbereich des die Spannhülsen aufnehmenden Futters in einer Drehspindel od.dgl. angeordnet ist.

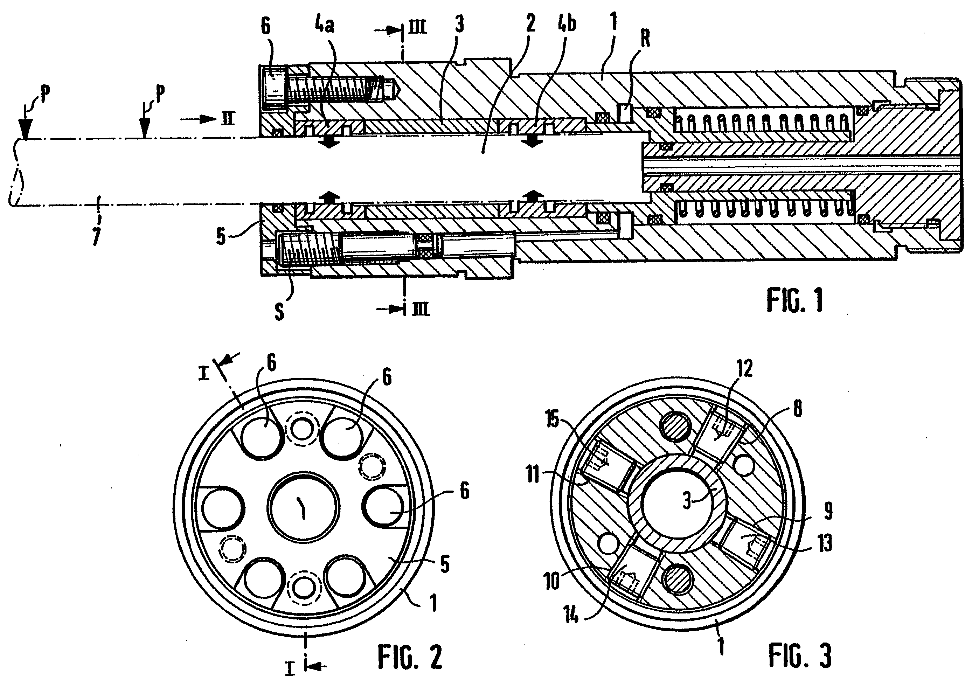

Das in den Figuren 1 bis 3 dargestellte Ausführungsbeispiel umfaßt einen Grundkörper 1 mit einer zylindrischen Innenbohrung 2, in der zwei durch einen Zwischenring 3 getrennte Spannhülsen 4a und 4b angeordnet sind. Die auf der Vorderseite durch den Deckel 5, der mittels Schrauben 6 am Grundkörper starr befestigt ist, festgelegten Spannhülsen werden durch eine Feder von rückwärts beaufschlagt, wobei die Entspannung über die Stellschraube S erfolgt, durch welche der hydraulische Druck im Raum R veränderbar ist. Diese Anordnung ist jedoch an sich bereits bekannt und soll daher im einzelnen nicht näher erläutert werden. Durch die axiale Zusammenstauchung ergibt sich eine Durchmesserveränderung gleichzeitig am Innen- und Außendurchmesser der Spannhülsen 4a und 4b, so daß sich diese sowohl nach außen in der Bohrung 2 des zylindrischen Grundkörpers 1, als auch nach innen an der zylindrischen Außenwand des nur strichpunktiert angedeuteten Werkstücks oder Werkzeugs 7 abstützt. Zwischen den beiden durch dicke Pfeile angedeuteten Spannstellen der Spannhülsen sind in einer Radialebene im Grundkörper 4 etwa um jeweils 90° gegeneinander versetzte Kegelgewindebohrungen 8 bis 12 angeordnet, in welche Kegelschrauben 12 bis 15 eingeschraubt sind. Die Versetzung der Kegelgewindebohrungen 8 bis 11 wird dabei - nachdem es auf eine äquidistante Versetzung nicht ankommt - so gewählt, wie es die Platzverhältnisse (ve rgl. hierzu insbesondere Fig. 3) gerade ermöglichen. Durch stärkeres Einschrauben einer dieser Schrauben 12 bis 15 in die jeweilige Kegelbohrung 8 bis 11 ergibt sich eine Verspannung im Grundkörper, die zu einer Winkelauslenkung im Grundkörper führt. Durch Feststellung des Winkelfehlers der Rundlaufgenauigkeit mit Hilfe eines oder mehrerer Meßpunkte P am Werkstück oder Werkzeug 7 läßt sich somit über eine entsprechende gegenläufige Verkippung durch stärkeres Anziehen der einen oder anderen Kegelschraube eine weitestgehende Justierung und Korrektur dieses Winkelfehlers erreichen.

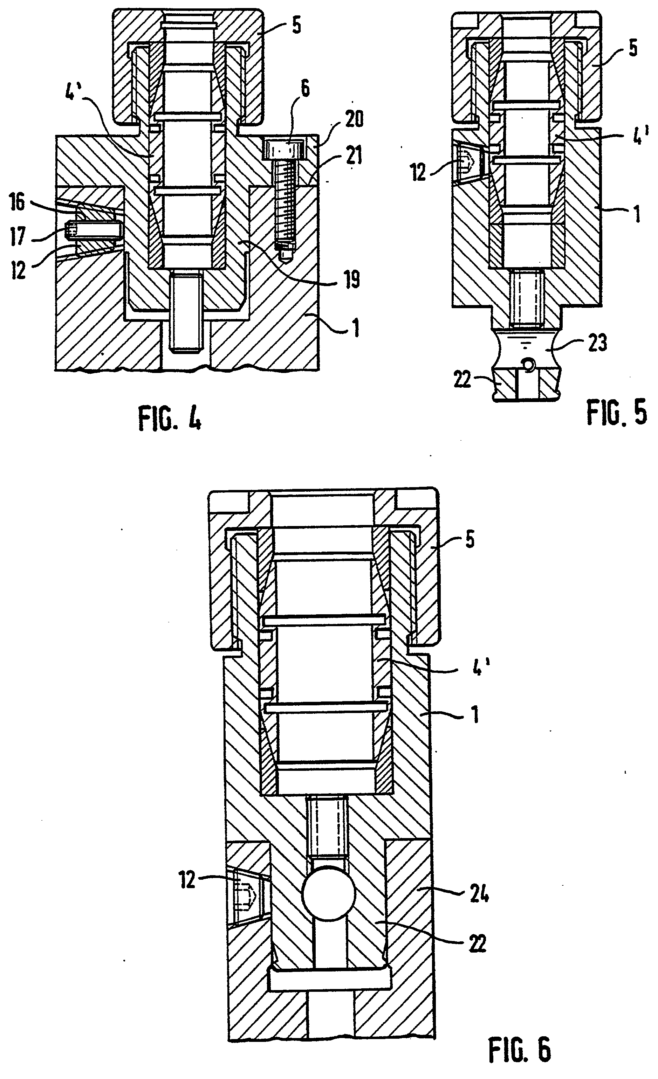

Bei dem in Fig. 4 dargestellten Ausführungsbeispiel sind die Kegelschrauben 12 bis 15, von denen in der Zeichnung nur die Kegelschraube 12 sichtbar ist, zusätzlich mit Innengewindebohrungen 16 zum Einschrauben von Ausgleichschrauben 17 versehen, die an einem die Spannhülse 4' mit zwei Spannstellungen aufnehmenden Futter 19 angreifen. Dieses Futter 19 ist mit einem Stirnflansch 20 versehen, der an der planen Stirnfläche 21 des Grundkörpers 1 gleitend verschiebbar anliegt (was bedeutet, daß die Befestigungsschrauben 6 nicht extrem fest angezogen sind), so daß mit Hilfe der Ausgleichsschrauben 17 der verschiedenen Kegelschrauben 12 bis 15 ein Ausgleich des Parallelitätsfehlers möglich ist.

In Fig. 5 ist eine gegenüber der Fig. 1 vereinfachte Ausbildung einer erfindungsgemäßen Spannvorrichtung gezeigt, bei der die rückwärtige Feder und die hydraulische Entspanneinrichtung entfällt. Darüber hinaus ist der Deckel 5 als Überwurfschraubkappe ausgebildet, so daß keine gesonderten Befestigungsschrauben 6 erforderlich sind. Mit Hilfe eines Schaftteils 22 mit einer Querbohrung 23 zum Eingreifen eines Spannelementes in einer nicht gezeichneten Drehspindel oder einem sonstigen rotierenden Maschinenteil läßt sich die Spannvorrichtung nach Fig. 5 an beliebige, mit derartigen handelsüblichen Steckeinsätzen versehene Maschinen anflanschen und mit Hilfe der erfindungsgemäßen Justiervorrichtung der in der Praxis unvermeidliche Winkelfehler kompensieren.

Die Fig. 6 zeigt eine in wesentlichen Teilen der Fig. 5 entsprechende Spannvorrichtung, bei der allerdings die Justiervorrichtung mit den Kegelschrauben 12 bis 15 nicht im Bereich der Lagerung der Spannhülse 4', sondern im Bereich der Lagerung des Verbindungszapfens 22 mi einem rotierenden Maschinenteil 24 angeordnet ist. Hinsichtlich dieser Anordnung der Justiereinrichtung entspricht die Anordnung nach Fig. 6 dann wiederum im wesentlichen der Anordnung nach Fig. 4, bei der ein Futter 19 vorgesehen ist, wobei man selbstverständlich auch das in Fig. 6 als Grundkörper bezeichnete Teil wiederum als eine Art Futter auffassen könnte, so daß dann das rotierende Maschinenteil 24 als Grundkörper bezeichnet werden könnte.

**Patentansprüche**

1. Spannvorrichtung für Werkstücke oder Werkzeuge mit hoher Rundlaufgenauigkeit, mit einem in einer zylindrischen Bohrung (2) eines Grundkörpers (1,24) gelagerten Schaftteil, dadurch gekennzeichnet, daß im Lagerbereich des Schaftteils eine Justiereinrichtung angeornet ist, die mehrere in einer Radialebene verteilt angeordnete Gewindebohrungen, insbesondere Kegelgewindebohrungen (8 bis 11) im Grundkörper (1), sowie darin einschraubbare Kegelschraube (12 bis 15) umfaßt.

2. Spannvorrichtung nach Anspruch 1, dadurch gekennzeichnet, daß drei oder mehr gegeneinander versetzte Gewindeborhungen (8 bis 11) im Grundkörper (1) angeordnet sind.

3. Spannvorrichtung nach Anspruch 1 oder 2, dadurch gekennzeichnet, daß die Kegelschrauben (12 bis 15) durchgehende Innengewindebohrungen (16) für Ausgleichsschrauben (17) zur Korrektur von Parallelitätsfehlern aufweisen.

4. Spannvorrichtung nach Anspruch 3, dadurch gekennzeichnet, daß die Ausgleichsschrauben (17) an einem das Schaftteil aufnehmenden Futter (19) angreifen, die mit einem Stirnflansch (20) an der planen Stirnfläche (21) des Grundkörpers (1) gleitend verschiebbar anliegt.

5. Spannvorrichtung nach einem der Ansprüche 1 bis 4, bei der das Schaftteil eine im Durchmesser veränderbare Spannhülse umfaßt, die von einem mechanischen oder hydraulischen Spannsystem beaufschlagt ist, dadurch gekennzeichnet, daß die Spannhülse (4a, 4b, 4') unmittelbar in der Bohrung des Grundkörpers (1) gelagert ist und daß die Justiereinrichtung neben einer - vorzugsweise zwischen zwei beabstandeten -Spannstelle(n) angeordnet ist.

6. Spannvorrichtung nach Anspruch 5, dadurch gekennzeichnet, daß die Justiereinrichtung im Bereich eines neben oder zwischen zwei Spannhülsen (4a, 4b) angeordneten Zwischenrings (3) angeordnet ist.

## Claims

1. A clamping device for workpieces or tools, with high true-running accuracy, having a shank portion mounted in a cylindrical bore (2) in a basic body (1, 24), characterised in that, disposed in the bearing region of the shank portion is an adjusting device which comprises a plurality of tapped holes, particularly tapered tapped holes (8 to 11), arranged distributed in a radial plane in the basic body (1), and tapered screws (12 to 15) which can be screwed therein.

2. A clamping device according to Claim 1, characterised in that three or more staggered tapped holes (8 to 11) are disposed in the basic body (1).

3. A clamping device according to Claim 1 or 2, characterised in that the tapered screws (12 to 15) comprise internal tapped holes (16) passing through them for compensating screws (17) for the correction of errors in parallelism.

4. A clamping device according to Claim 3, characterised in that the compensating screws (17) act on a lining (19) which receives the shank portion and rests with an end flange (20) on the plane end face (21) of the basic body (1) for sliding displacement.

5. A clamping device according to any one of Claims 1 to 4, wherein the shank portion comprises a clamping sleeve which is variable in diameter and which is acted upon by a mechanical or hydraulic clamping system, characterised in that the clamping sleeve (4a, 4b, 4') is mounted directly in the bore of the basic body (1), and that the adjusting device is disposed next to a clamping position – preferably between two clamping positions spaced apart.

6. A clamping device according to Claim 5, characterised in that the adjusting device is disposed in the region of an intermediate ring (3) disposed beside or between two clamping sleeves (4a, 4b).

## Revendications

1. Dispositif de serrage pour pièces à usiner ou outils possédant une précision élevée de rond, comportant un élément en forme de tige, logé dans un perçage cylindrique (2) dans le corps de base (1, 24), caractérisé par le fait que dans la zone de palier de l'élément en forme de tige se trouve disposé un dispositif d'ajustement, qui comporte plusieurs perçages taraudés répartis dans un plan radial, notamment des perçages taraudés coniques (8 à 11) ménagés dans le corps de base (1), ainsi que des vis coniques (12 à 15), pouvant être vissées dans ces trous taraudés.

2. Dispositif de serrage selon la revendication 1, caractérisé en ce que trois ou un plus grand nombre de perçages taraudés (8 à 11) décalés les uns par rapport aux autres sont ménagés dans le corps de base (1).

3. Dispositif de serrage selon la revendication 1 ou 2, caractérisé en ce que les vis coniques (12 à 15) comportent des perçages taraudés intérieurs traversants (16) permettant l'insertion de vis de compensation (17) servant à corriger des défauts de parallélisme.

4. Dispositif de serrage selon la revendication 3, caractérisé en ce que les vis de compensation (17) attaquent un mandrin (19), qui loge l'élément en forme de tige et s'applique, de manière à être mobile par glissement, par une bride frontale (20) contre la surface frontale plane (21) du corps de base (1).

5. Dispositif de serrage selon l'une des revendications 1 à 4, dans lequel l'élément en forme de tige comporte une douille de serrage de diamètre variable, qui est chargée par un système de serrage mécanique ou hydraulique, caractérisé en ce que la douille de serrage (4a, 4b, 4') est logée directement dans le perçage du corps de base (1) et que le dispositif d'ajustement est disposé à côté d'un point de serrage – de préférence entre deux points de serrage distants.

6. Dispositif de serrage selon la revendication 5, caractérisé en ce que le dispositif d'ajustement est disposé au voisinage d'une bague intercalaire (3) disposée à côté ou entre deux douilles de serrage (4a, 4b).

FIG. 1

FIG. 2

FIG. 3

EP 0 265 621 B1

FIG. 4

FIG. 5

FIG. 6